# EUROPÄISCHE PATENTSCHRIFT

(11) **EP 1 775 165 B1**
(45) Veröffentlichungstag und Bekanntmachung des Hinweises auf die Patenterteilung: **27.08.2008**
(21) Anmeldenummer: 06019730.8
(22) Anmeldetag: 21.09.2006
(51) Int. Cl.: B60R 5/04

(54) **Abdeckvorrichtung für einen Laderaum eines Kraftfahrzeugs**
Luggage space cover of a motor vehicle
Cache-bagages d'un véhicule automobile

(30) Priorität: 13.10.2005 DE 102005049999
(43) Veröffentlichungstag der Anmeldung: 18.04.2007
(73) Patentinhaber: BOS GmbH & Co. KG, 73760 Ostfildern (DE)
(72) Erfinder: Wörner, Thomas, 71065 Sindelfingen (DE)
(74) Vertreter: Patentanwälte Ruff, Wilhelm, Beier, Dauster & Partner

(56) Entgegenhaltungen:
- EP-A- 1 574 394
- EP-A1- 1 524 153
- EP-A2- 1 084 907
- EP-A2- 1 375 791
- EP-A2- 1 479 564

## Beschreibung

Die Erfindung betrifft eine Abdeckvorrichtung für einen Laderaum eines Kraftfahrzeugs gemäß dem Oberbegriff des Anspruchs 1.

Bei Kombi-Personenkraftwagen ist es allgemein bekannt, in einem heckseitigen Laderaum eine Laderaumabdeckung vorzusehen. Die Laderaumabdeckung weist ein flexibles Flächengebilde auf, das auf- und abwickelbar auf einer fahrzeugfest gelagerten Wickelwelle gehalten ist. An einem in Auszugrichtung vorderen Stirnende des flexiblen Flächengebildes ist ein formstabiles Profilteil angeordnet, das auch als Konturteil bezeichnet wird. Das formstabile Profilteil weist an seinen gegenüberliegenden Seiten jeweils einen Führungszapfen auf, der in ausgezogener Schutzposition, in der die Laderaumabdeckung den Laderaum etwa horizontal überdeckt, in fahrzeugseitigen Halterungen lösbar eingehängt ist. Die fahrzeugseitigen Halterungen sind in einem Heckbereich des Laderaumes an gegenüberliegenden Seitenbegrenzungen des Laderaumes, insbesondere im Bereich gegenüberliegender Seitenwandungen, vorgesehen. An die fahrzeugseitigen Halterungen schließen schräg nach oben in Richtung eines Dachhimmels verlaufende Gleitführungen an, in denen das Profilteil für eine Überführung aus der ausgezogenen Schutzposition in eine KomfortpositiOn nach oben verlagert werden kann. Diese Komfortposition nimmt das Flächengebilde und das Profilteil bei geöffneter Heckklappe ein, um ein vereinfachtes Be- oder Entladen des Laderaumes zu ermöglichen, ohne die Laderaumabdeckung aushängen und in ihre Ruheposition überführen zu müssen. Nach dem Be- oder Entladen kann das Profilteil und das Flächengebilde in einfacher Weise manuell wieder in die horizontale Schutzposition zurückgeführt werden.

Eine Abdeckvorrichtung gemäß dem Oberbegriff des Anspruchs 1 ist aus der EP-A-1 574 394 bekannt.

Aufgabe der Erfindung ist es, eine Abdeckvorrichtung der eingangs genannten Art zu schaffen, die eine gegenüber dem Stand der Technik verbesserte Funktion aufweist.

Diese Aufgabe wird dadurch gelöst, dass das Sicherungsmittel in einem oberen Endbereich der Profilführungen angeordnet ist. Das Sicherungsmittel dient dazu, das Profilteil und damit auch das Flächengebilde in der nach oben verlagerten Komfortposition zu blockieren. Dadurch kann verhindert werden, dass das Profilteil in den Profilführungen unbeabsichtigt wieder nach unten gleitet. Die erfindungsgemäße Lösung ist insbesondere vorteilhaft für relativ steil ausgerichtete Profilführungen, in denen eine Rückholkraft einer Wickelfeder nicht ausreicht, um das Profilteil in den Profilführungen in der Komfortposition zu fixieren. Die erfindungsgemäße Lösung ist somit insbesondere für Ausführungen einsetzbar, in denen durch das Kraftverhältnis zwischen Aufwickelkraft eines Wickelantriebes, insbesondere der Wickelfeder, und Neigung der Gleitführungen bzw. der Profilführungen keine Selbsthemmung für das Profilteil erzielbar ist.

In Ausgestaltung der Erfindung ist das wenigstens eine Sicherungsmittel lastabhängig in eine Freigabeposition überführbar. In dieser Freigabeposition ist das Profilteil in den Profilführungen verlagerbar.

In weiterer Ausgestaltung der Erfindung sind Zwangsführungsmittel in dem oberen Endbereich der Profilführungen vorgesehen, die das Profilteil in eine relativ zu einer normalen Führungsstellung zu dem Dachbereich hin verlagerte Parkposition ausrichten. Die normale Führungsstellung ist die Stellung, in der das Profilteil während seiner Überführung zwischen Schutzposition und Komfortposition ausgerichtet ist. Die Parkposition entspricht im wesentlichen der Komfortposition mit dem Unterschied, dass die zusätzliche Verlagerung des Profilteiles zu dem Dachbereich hin vorgenommen ist. Vorzugsweise wird das Profilteil in seiner Komfortposition zum Dachbereich hin verschwenkt, so dass das Profilteil mittels einer Schwenkbewegung in die Parkposition überführt wird. Es ist auch möglich, das Profilteil bereits vor Erreichen der Komfortposition zum Dachhimmel hin zu verlagern. Vorteil dieser Ausführung ist es, dass das relativ großflächige, formstabile Profilteil in der Komfortposition nicht durch sein Eigengewicht nach unten hängen und so die Laderaumkapazität beeinträchtigen kann, sondern vielmehr in eine platzsparende Stellung zum Dachhimmel hin verlagert ist. Das Be- und Entladen des Laderaumes wird hierdurch weiter erleichtert.

In weiterer Ausgestaltung der Erfindung sind die Sicherungsmittel mechanisch ausgeführt und kraft- oder formschlüssig wirksam. Hier sind insbesondere Riegel- oder Klinkenelemente oder auch Klemmelemente einsetzbar. Vorzugsweise sind entsprechende Rieael-, Klemm- oder Klinkenelemente federkraftbeaufschlagt, um in besonders einfacher Weise das lastabhängige Lösen des Profilteiles aus der Komfortposition zu ermöglichen.

In weiterer Ausgestaltung der Erfindung sind die Sicherungsmittel berührungslos wirksam. Bei dieser Ausführungsform bauen die Sicherungsmittel vorzugsweise ein Magnetfeld auf, das elektrisch geschaltet werden kann oder durch Permanentmagnete aufrechterhalten wird. In letzterem Fall ist die Magnetkraft derart begrenzt, dass durch Ergreifen des Profilteiles und manuelle Kraftbeaufschlagung ein Lösen des Profilteiles aus der Komfortposition ermöglicht wird.

In weiterer Ausgestaltung der Erfindung ist das Profilteil an seinen gegenüberliegenden Seiten mit Führungselementen versehen, die in den Profilführungen geführt sind und eine quer zur Verlagerungsrichtung verlaufende Führungsachse bilden, die in Abstand zu einem Schwerpunkt des Profilteiles verläuft, und den Führungselementen sind Stützmittel zugeordnet, die das Profilteil über seinen Verlagerungsweg in den Gleitführungen gegen seine Schwerkraft in einer definierten Führungsstellung ausgerichtet halten. Dies ist eine vorteilhafte Ausgestaltung der Zwangsführungsmittel, um das Profilteil in die Parkposition zu überführen. In vorteilhafter Weise wird das Profilteil durch die Stützmittel über die gesamte Länge seines Verlagerungsweges zwischen der Schutzposition und der Komfortposition bereits in einer gegen seine Schwerkraft angehobenen Position geführt, so dass das Erreichen der Komfortposition zwangsläufig auch bereits das Erreichen der Parkposition umfasst. Die Stützmittel können separat zu den Führungselementen oder einstückig mit diesen verbunden sein.

In weiterer Ausgestaltung der Erfindung umfassen die Zwangsführungsmittel mechanische Stützmittel, die bei der Überführung des Profilteiles in die Parkposition auf das Profilteil ein Drehmoment zum Dachhimmel hin ausüben. Dadurch wird mit mechanischen Mitteln die gewünschte Überführung des Profilteiles in die platzsparende Parkposition erzielt.

In weiterer Ausgestaltung der Erfindung sind die Führungselemente relativ zu einer Längsachse des Profilteiles rotationsunsymmetrisch ausgeführt. Dadurch ist es möglich, das Profilteil in den Profilführungen gestützt zu führen, falls auch die Profilführungen selbst entsprechend an die Gestaltung der Führungselemente angepasst sind. Die Führungselemente sind somit insbesondere als Gleit- oder Kulissensteine für die Profilführungen ausgebildet.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch einen Ausschnitt eines Kraftfahrzeugs, das mit einer Ausführungsform einer erfindungsgemäßen Abdeckvorrichtung versehen ist,
- Fig. 2: in vergrößerter, schematischer Darstellung die Abdeckvorrichtung nach Fig. 1,
- Fig. 2a: einen vergrößerten Ausschnitt II der Fig. 2,
- Fig. 3: eine erste Variante zur Sicherung eines Profilteiles der Abdeckvorrichtung in einer Komfortposition unterhalb eines Dachhimmels,
- Fig. 4 bis 9: weitere Ausführungen mechanischer Sicherungsmittel für die Abdeckvorrichtung nach Fig. 1 und
- Fig. 10: eine magnetische Variante eines Sicherungsmittels für das Profilteil der Abdeckvorrichtung.

Ein Kraftfahrzeug in Form eines Personenkraftwagens mit einem von außen her einsehbaren Laderaum 1, insbesondere in Form eines Kombi-Personenkraftwagens, eines Vans, eines SUVs oder ähnlichem, weist eine nachfolgend näher beschriebene Abdeckvorrichtung auf, um den Laderaum 1 bei Bedarf etwa auf Höhe einer Fahrzeugbordkante mit einer flächigen Abdeckung zu versehen. Der Laderaum 1 wird nach vorne durch eine Rückenlehnenanordnung 2 einer Sitzbank begrenzt. Der Laderaum 1 erstreckt sich nach oben offen bis zu einem Dachhimmel der Fahrzeugkarosserie. Nach hinten ist der Laderaum 1 in nicht näher dargestellter Weise durch ein bewegliches Karosserieheckteil, insbesondere eine nach oben aufschwenkende Heckklappe, verschlossen. Auf seinen gegenüberliegenden Seiten ist der Laderaum durch Seitenbegrenzungen 3 begrenzt, die durch entsprechende Karosserieseitenwände bzw. zugehörige Fahrzeuginnenraumverkleidungen sowie entsprechende Seitenfenster definiert sind.

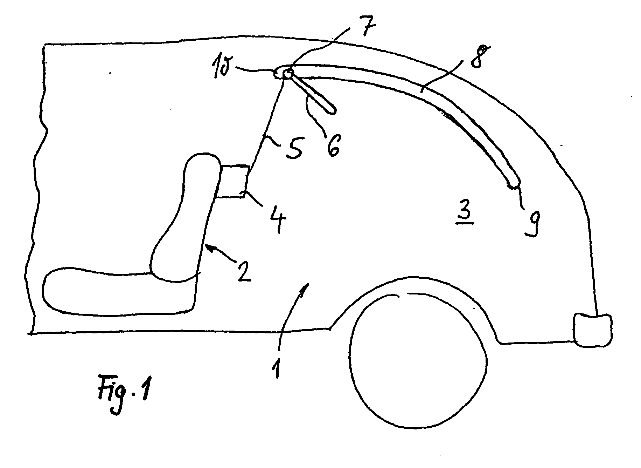

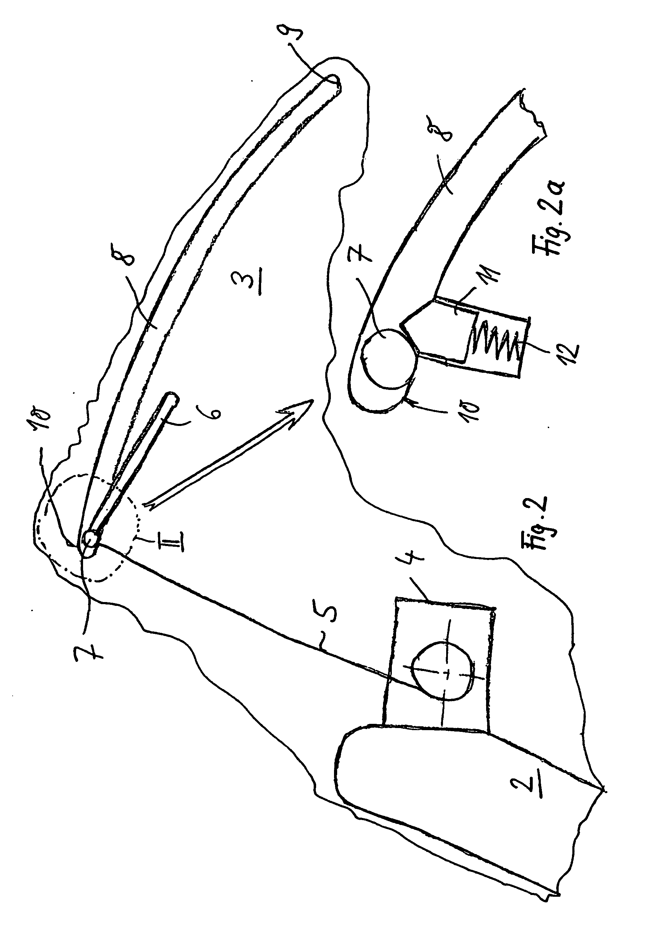

Die Abdeckvorrichtung weist ein Kassettengehäuse 4 auf, das etwa auf Höhe der Fahrzeugbordkante im Bereich einer Rückseite der Rückenlehnenanordnung 2 angeordnet ist. Das Kassettengehäuse 4 erstreckt sich in Fahrzeugquerrichtung über die Breite des Laderaumes 1. In dem Kassettengehäuse 4 ist eine Wickelwelle drehbar gelagert, die in Aufwickelrichtung durch eine Wickelfedereinheit drehmomentbeaufschlagt ist. Auf der Wickelwelle ist ein Flächengebilde 5 auf- und abwickelbar gehalten. Das flexible Flächengebilde 5 ist an seinem in Auszugrichtung vorderen Stirnendbereich mit einem formstabilen Profilteil 6 versehen, das ein Konturteil bildet. Das Profilteil 6 ist plattenartig ausgeführt und erstreckt sich wenigstens über die gesamte Breite des flexiblen Flächengebildes 5. Das Profilteil 6 ist mit Hilfe von Führungselementen 7 in gegenüberliegenden, seitlichen Profilführungen gleit- oder rollbeweglich angeordnet. Die Profilführungen 8 erstrecken sich beim dargestellten Ausführungsbeispiel in den Seitenbegrenzungen 3 des Laderaumes 1. Die Profilführungen 8 verlaufen ausgehend von einem Heck des Laderaumes 1 längs entsprechend seitlicher Karosseriesäulen nach oben bis in einen seitlichen Dachrahmenbereich. Die Profilführungen 8 sind dabei oberhalb entsprechender Seitenfenster angeordnet. Die Profilführungen 8 sind fahrzeugfest positioniert und insbesondere mit den entsprechenden seitlichen Karosseriesäulenabschnitten fest verbunden. Die Profilführungen 8 sind als Führungsschienen ausgeführt, in denen jeweils ein Führungselement 7 des Profilteiles 6 roll- oder gleitbeweglich geführt ist. Ein unteres, rückseitiges Stirnende 9 der Profilführungen 8 definiert eine untere Schutzposition für das Flächengebilde 5 und das Profilteil 6, in der das Flächengebilde 5 etwa horizontal ausgezogen ist und sich über die Länge des Laderaumes 1 erstreckt. Das Profilteil 6 ist derart gestaltet, dass es in der etwa horizontalen Schutzposition den zwischen dem aufgespannten Flächengebilde 5 und einer Innenseite der Heckklappe verbleibenden Spaltbereich im wesentlichen bündig überdeckt. Die Profilführungen 8 weisen ausgehend von der unteren Schutzposition des Flächengebildes 5 und damit ausgehend von dem unteren Stirnende 9 eine Steigung nach oben auf, die sich bei dem in Fig. 1 gezeigten Beispiel allmählich reduziert bis zu einem oberen Stirnende 10, das eine obere Komfortposition des flexiblen Flächengebildes 5 und des Profilteiles 6 definiert, die in den Fig. 1 und 2 dargestellt ist.

Die Steigung der Profilführungen 8 verändert sich beim schematisch dargestellten Ausführungsbeispiel nach den Fig. 1 und 2. Die erfindungswesentlichen Vorteile, wie sie nachfolgend beschrieben werden, sind insbesondere dann erzielbar, wenn die Profilführungen 8 auch in ihrem oberen Bereich, d.h. im Bereich des oberen Stirnendes 10 noch eine Neigung von mehr als 10° zur Horizontalen aufweisen.

Im normalen Fahrbetrieb befindet sich das flexible Flächengebilde 5 in seiner Schutzposition, in der auch das Profilteil 6 im unteren Stirnendbereich 9 der Profilführungen 6 positioniert ist. Um das Flächengebilde 5 und das Profilteil 6 in der unteren Schutzposition zu halten, ist in nicht näher dargestellter Weise eine entsprechende Sperrvorrichtung vorgesehen. Um für das Be- und Entladen einen verbesserten Zugang zu dem Laderaum 1 zu ermöglichen, wird das flexible Flächengebilde 5 gemeinsam mit seinem Profilteil 6 beim Öffnen der Heckklappe in eine obere, in den Fig. 1 und 2 dargestellte Komfortposition überführt. Hierzu wird in einfacher Weise die Sperrvorrichtung im Bereich des unteren Stirnendes 9 gelöst, wodurch das Profilteil 6 mit seinen Führungselementen 7 für eine Bewegung nach oben in den Profilführungen 8 freigegeben wird. Der Antrieb für die Verlagerung des Profilteiles 6 und der Führungselemente 7 erfolgt in einfacher Weise durch die Aufwickelkraft der Wickelfedereinheit, die auf die Wickelwelle innerhalb des Kassettengehäuses 4 in Aufwickelrichtung wirkt. Die Sperrvorrichtung kann manuell oder auch zwangsläufig mit dem Öffnen der Heckklappe gelöst werden.

Um zu vermeiden, dass das Profilteil 6 und das flexible Flächengebilde 5 bei relativ großer Steigung der Profilführungen 8 durch das Eigengewicht des Profilteiles 6 wieder in Richtung der unteren Schutzposition zurückgleitet oder -rollt, sind dem oberen Endbereich der Profilführungen 8, der in dem Stirnendbereich 10 endet, Sicherungsmittel 11, 12 (Fig. 2a) zugeordnet, die die Führungselemente 7 in dem oberen Endbereich und damit in der oberen Komfortposition des Profilteiles 6 sichern.

Bei der Ausführungsform nach Fig. 2a sind die Sicherungsmittel durch jeweils einen Sicherungskeil 11 in jeder Profilführung 8 gebildet, der von unten her in die Profilführung 8 hineinragt und in Sperrrichtung, d.h. nach oben, durch eine Druckfeder 12 federbelastet ist. In beiden Profilführungen 8 ist die gleiche, symmetrische Anordnung jeweils eines Sicherungskeiles 11 vorgesehen. Um das Profilteil 6 und damit die Führungselemente 7 aus der gesicherten Komfortposition wieder nach unten zu bewegen, wird in einfacher Weise das Profilteil 6 von Hand ergriffen und nach unten gezogen. Die Rückhaltekraft der Sicherungskeile 11 ist so gewählt, dass bei einem manuellen Ziehen an dem Profilteil in Richtung des Fahrzeughecks die Sicherungskeile 11 gegen die Druckkraft der jeweiligen Druckfeder 12 nach unten gedrückt werden, wodurch die Führungselemente 7 die Sicherungsmittel überfahren können.

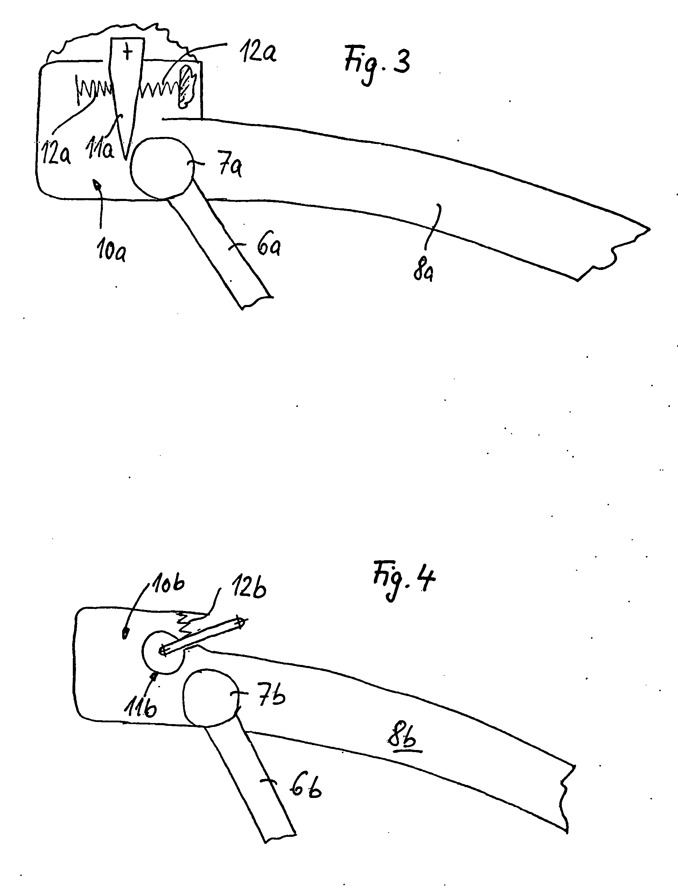

Bei der Ausführungsform nach Fig. 3 ist anstelle eines Sicherungskeiles eine Sicherungsklinke 11a vorgesehen, die oberhalb des Stirnendbereiches 10a fahrzeugfest und schwenkbeweglich aufgehängt ist und durch zwei Ausgleichsfedern 12a in einer Gleichgewichtslage gehalten wird. Die Funktionsweise ist die gleiche wie bei der Ausführungsform nach Fig. 2a. Die Führungselemente 7a drücken die Sicherungsklinken 11a soweit zur Seite, dass das entsprechende Führungselement 7a an der Stirnkante der jeweiligen Sicherungsklinke 11a vorbeigleiten kann. Anschließend wird die Sicherungsklinke 11a wieder in ihre Gleichgewichtslage zurückgedrückt und sperrt das Führungselement 7a in dem Stirnendbereich 10a ein.

Auch die übrigen, nachfolgend beschriebenen Varianten betreffen ähnliche Funktionsweisen. Bei der Ausführungsform nach Fig. 4 ist ein Klinkenrad 11 b vorgesehen, das ebenfalls durch eine Druckfeder beaufschlagt ist. Die nähere Funktionsweise ist der Fig. 4 gut entnehmbar. Das Klinkenrad 11 b weist ein an einem Schwenkhebel drehbar gelagertes Rad auf, das in der in Fig. 4 dargestellten Sperrlage so weit in den Bewegungsweg des Führungselementes 7b hineinragt, dass es eine kraftbegrenzte Sperrklinke für das Führungselement 7b bildet.

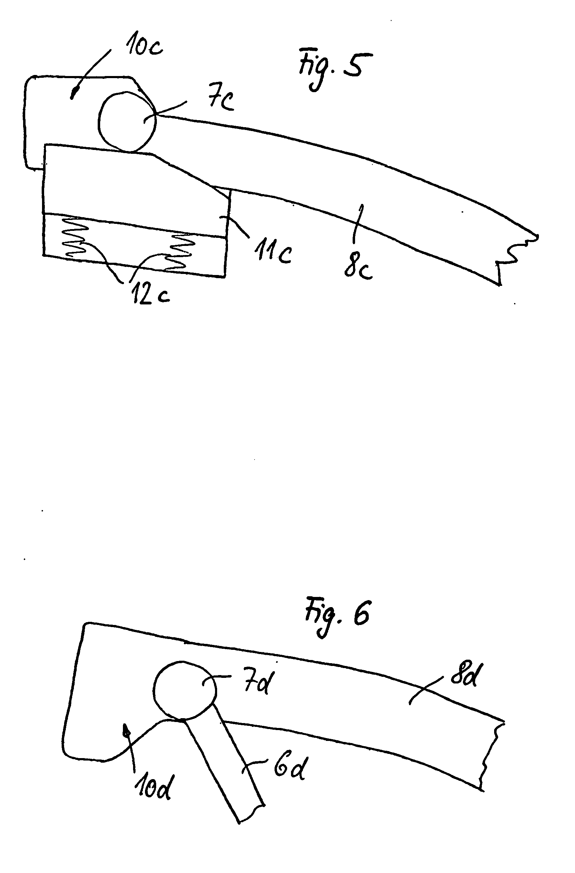

Bei der Ausführungsform nach Fig. 5 ist anstelle einer Rastklinke ein keilartiges Klemmelement vorgesehen, das das Führungselement 7c des Profilteiles in eine taschenartige, obere Aufnahme des Stirnendbereiches 10c hineindrückt. Auch das Keilelement 11c ist durch Druckfedern 12c in die Profilführung 8c hinein druckbeaufschlagt.

Bei der Ausführungsform nach Fig. 6 wird auf ein Federelement verzichtet. Hier ist im Bereich des Stirnendes 10d eine nach unten auskragende Aufnahmetasche vorgesehen, in die die Führungselemente 7d im Endbereich der Profilführung 8d zwangsläufig eintauchen.

Bei allen beschriebenen Ausführungsbeispielen ist jedes Führungselement 7 bis 7h als kreisförmiges Roll- oder Gleitelement und damit als rotationssymmetrisches Roll- oder Gleitelement ausgeführt. Gemäß einem nicht dargestellten Ausführungsbeispiel der Erfindung ist es aber auch möglich, die Führungselemente rotationsunsymmetrisch zu gestalten und nach Art von Gleitsteinen in den Profilführungen zu verschieben. Um bei den Ausführungsformen nach den Fig. 2a bis 10 einen geringen Reibungswiderstand für die Führungselemente zu erzielen, sind diese vorzugsweise als Rollelemente ausgeführt.

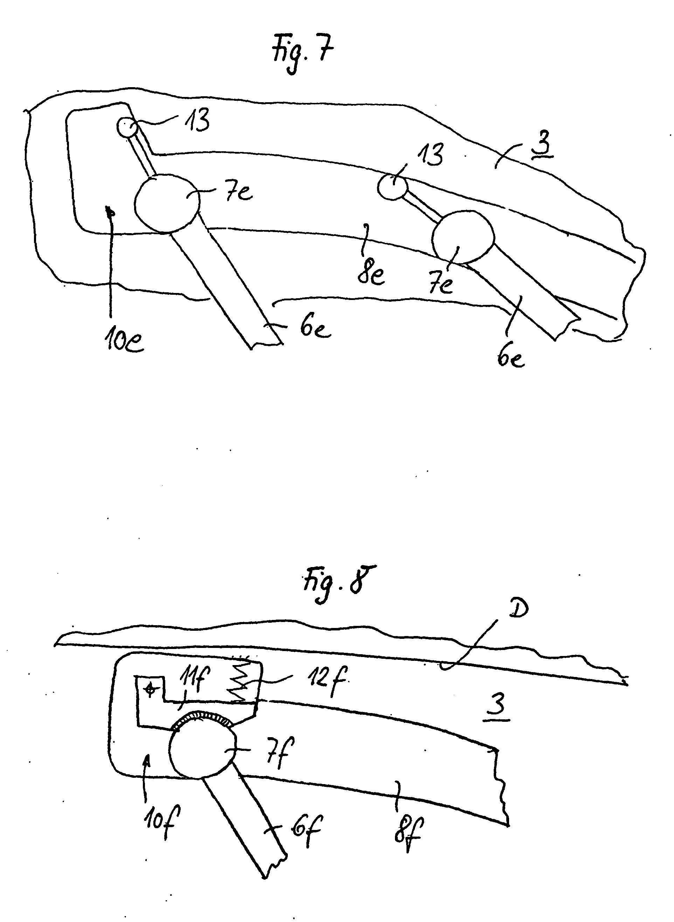

Bei der Ausführungsform nach Fig. 7 sind dem Profilteil 6e im Bereich der Führungselemente 7e zusätzliche Stützmittel 13 zugeordnet, die als Stützfortsatz ausgeführt sind, der sich in Verlängerung des Profilteiles 6e auf der gegenüberliegenden Seite von dem Führungselement 7 ausgehend erstreckt. Auch der Stützfortsatz 13 kann ein rotationssymmetrisches Gleit- oder Rollelement an seinem Stirnende aufweisen. Der Stützfortsatz 13 dient dazu, das Profilteil 6e während des gesamten Verlagerungsvorganges zwischen der unteren Schutzposition und der oberen Komfortposition in einer definierten Stellung auszurichten und damit gegen das Eigengewicht des Profilteiles 6e anzuheben. Denn das Eigengewicht des Profilteiles 6e übt um die Drehachse des rotationssymmetrischen Führungselementes 7e ein Drehmoment nach unten aus, das durch den Stützfortsatz 13, der sich an einem oberen Schienenabschnitt der Profilführung 8e abstützt, ausgeglichen wird. Der Stützfortsatz 13 dient gleichzeitig dazu, das Profilteil 6e in der Komfortposition, d.h. im oberen Stirnendbereich 10e der Profilführungen 8e zu sichern. Hierzu ist im oberen Stirnendbereich 10e jeder Profilführung 8e eine nach oben erstreckte Aussparung vorgesehen, in die der Stützfortsatz 13 eintaucht und so eine zusätzliche Stützung des Profilteiles 6e erreicht.

Bei der Ausführungsform nach Fig. 8 ist eine Sperrklinke 11f im oberen Stirnendbereich 10f der Profilführungen 8f vorgesehen, die mit einem Aufnahmebereich versehen ist, der auf die Krümmung des Führungselementes 7f abgestimmt ist. Der Aufnahmebereich kann zusätzlich mit einem Reibbelag versehen sein. Das Sicherungsmittel 11f ist als Sperrklinke ausgeführt, die durch eine Druckfeder 12f federbelastet ist.

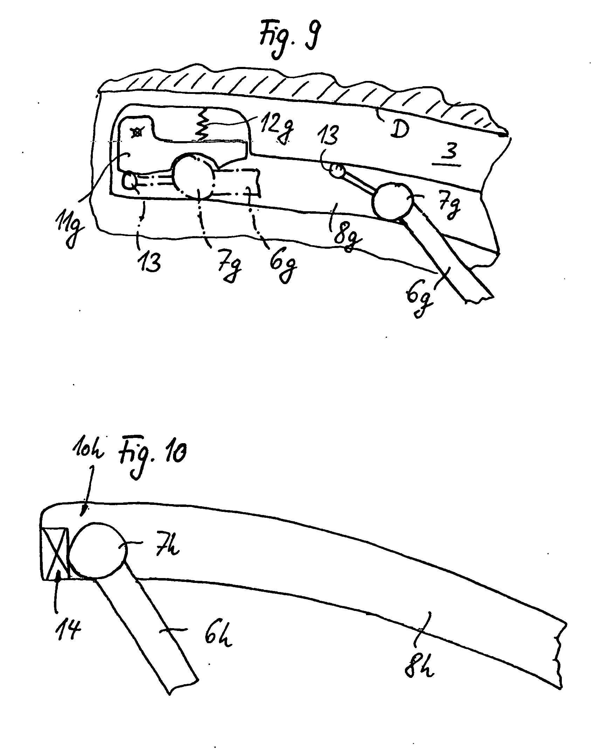

Bei der Ausführungsform nach Fig. 9 ist eine Sperrklinkenanordnung ähnlich Fig. 8 vorgesehen. Zusätzlich ist das Profilteil 6e bzw. das jeweilige Führungselement 7g mit einem Stützfortsatz 13 versehen, wie er in Fig. 7 bereits beschrieben worden war. Der Stützfortsatz 13 dient bei der Ausführungsform nach Fig. 9 dazu, das Profilteil 6g in der Komfortposition in eine zum Dachhimmel D hin verlagerte Parkposition zu verschwenken und in dieser Parkposition zu halten. Hierzu gleitet der Stützfortsatz 13 an der Sperrklinke 11g entlang. Gleichzeitig stützt sich das rollbewegliche Führungselement 7g an dem unteren Schienenabschnitt der Profilführung 8g ab.

Bei der Ausführungsform nach Fig. 10 sind die Führungselemente 7h mit einem magnetischen Material versehen und im Stirnendbereich 10h ist als Sicherungsmittel wenigstens ein Magnetelement 14 vorgesehen, das das jeweilige Führungselement 7h und damit auch das Profilteil 6h in der Komfortposition sichert.

## Patentansprüche

1. Abdeckvorrichtung für einen Laderaum (1) eines Kraftfahrzeugs mit einem flexiblen Flächengebilde (5), das auf einer Wickelwelle auf- und abwickelbar gehalten ist, und das an seinem in Auszugrichtung vorderen Stirnende mit einem formstabilen Profilteil (7) versehen ist, das in einer etwa horizontal ausgezogenen Schutzposition des Flächengebildes (5) in fahrzeugseitigen Aufnahmen gehalten ist, die an gegenüberliegenden Seitenbegrenzungen des Laderaumes (1) angeordnet sind, sowie mit Profilführungen (8), die an die Aufnahmen anschließen und sich entlang der Seitenbegrenzungen des Laderaumes (1) bis in einen Dachbereich des Laderaumes (1) erstrecken, in denen das Profilteil zusammen mit dem Flächengebilde (5) für eine Bewegung zwischen der Schutzposition und einer Komfortposition gleit- oder rollbeweglich verlagerbar ist, wobei den Profilführungen (8 bis 8h) wenigstens ein Sicherungsmittel (11 bis 11g, 12 bis 12g, 14) zum zeitweisen Festsetzen des Profilteiles (6 bis 6h) zugeordnet ist, **dadurch gekennzeichnet, dass** das Sicherungsmittel (11 bis 11g, 12 bis 12g, 14) in einem oberen Endbereich der Profilführungen (8 bis 8h) angeordnet ist.

2. Abdeckvorrichtung nach Anspruch 1, **dadurch gekennzeichnet, dass** das wenigstens eine Sicherungsmittel lastabhängig in eine Freigabeposition überführbar ist.

3. Abdeckvorrichtung nach Anspruch 1, **dadurch gekennzeichnet, dass** Zwangsführungsmittel (13) insbesondere in dem oberen Endbereich der Profilführungen vorgesehen sind, die das Profilteil (6g) in eine relativ zu einer normalen Führungsposition zu dem Dachbereich (D) hin verlagerte Parkposition ausrichten.

4. Abdeckvorrichtung nach Anspruch 1 oder 2, **dadurch gekennzeichnet, dass** die Sicherungsmittel (11 bis 11g, 12 bis 12g) mechanisch ausgeführt und kraft- oder formschlüssig wirksam sind.

5. Abdeckvorrichtung nach Anspruch 1 oder 2, **dadurch gekennzeichnet, dass** die Sicherungsmittel (14) insbesondere durch Magnetfeldaufbau berührungslos wirksam sind.

6. Abdeckvorrichtung nach Anspruch 1, **dadurch gekennzeichnet, dass** das Profilteil (6e) an seinen gegenüberliegenden Seiten mit Führungselementen (7e) versehen ist, die in den Profilführungen (8e) geführt sind und eine quer zur Verlagerungsrichtung verlaufende Führungsachse bilden, die in Abstand zu einem Schwerpunkt des Profilteiles (6e) verläuft, und dass den Führungselementen (7e) Stützmittel (13) zugeordnet sind, die das Profilteil (6e) über seinen Verlagerungsweg in den Profilführungen (8e) gegen seine Schwerkraft in einer definierten Führungsstellung ausgerichtet halten.

7. Abdeckvorrichtung nach Anspruch 3, **dadurch gekennzeichnet, dass** die Zwangsführungsmittel mechanische Stützmittel (13) umfassen, die bei der Überführung des Profilteiles (6e) in die Parkposition auf das Profilteil (6g) ein Drehmoment zum Dachhimmel (D) hin ausüben.

8. Abdeckvorrichtung nach einem der vorhergehenden Ansprüche, **dadurch gekennzeichnet, dass** die Führungselemente relativ zu einer in Fahrzeugquerrichtung verlaufenden Längsachse des Profilteiles rotationsunsymmetrisch ausgeführt sind.

## Claims

1. Cover device for a luggage space (1) of a motor vehicle having a flexible flat structure (5) which is held in such a way that it can be wound onto and unwound from a winding shaft and which is provided at its front end in the pulling-out direction with a dimensionally stable profiled part (7) which is secured in receptacles on the vehicle in an approximately horizontally pulled-out protective position of the flat structure (5), said receptacles being arranged on opposite lateral boundaries of the luggage space (1) and with profile guides (8) which adjoin the receptacles and extend along the lateral boundaries of the luggage space (1) as far as a roof region of the luggage space (1), in which lateral boundaries the profiled part can be moved in a sliding or rolling fashion together with the flat structure (5) for movement between the protective position and a comfort position, where at least one securing means (11 to 11g, 12 to 12g, 14) for temporarily fixing the profiled part (6 to 6h) is assigned to the profile guides (8 to 8h), **characterized in that** the securing means (11 to 11g, 12 to 12g, 14) is arranged in an upper end region of the profile guides (8 to 8h).

2. Cover device according to Claim 1, **characterized in that** the at least one securing means can be transferred into a release position as a function of the load.

3. Cover device according to Claim 1, **characterized in that** positive guiding means (13) are provided in particular in the upper end region of the profile guides and they align the profiled part (6g) in a parked position which is moved towards the roof region (D) relative to a normal guide position.

4. Cover device according to Claim 1 or 2, **characterized in that** the securing means (11 to 11g, 12 to 12g) are of mechanical design and connect in a non-positively or positively locking fashion.

5. Cover device according to Claim 1 or 2, **characterized in that** the securing means (14) act in a contactless fashion, in particular by building up a magnetic field.

6. Cover device according to Claim 1, **characterized in that** the profiled part (6e) is provided on its opposite sides with guide elements (7e) which are guided in the profile guides (8e) and form a guide axis which extends transversely with respect to the direction of movement and runs at a distance from a center of gravity of the profiled part (6e), and **in that** the guide elements (7e) are assigned support means (13) which hold the profiled part (6e) oriented in a defined guide position over its movement path in the profile guides (8e) counter to its gravitational force.

7. Cover device according to Claim 3, **characterized in that** the positive guiding means comprise mechanical support means (13) which exert a torque on the profiled part (6g) towards the inner roof lining (D) during the transfer of the profiled part (6e) into the parked position.

8. Cover device according to one of the preceding claims, **characterized in that** the guide elements are of rotationally non-symmetrical design relative to a longitudinal axis of the profiled part which runs in the transverse direction of the vehicle.

## Revendications

1. Cache-bagages pour un coffre (1) d'un véhicule automobile, avec une structure plane souple (5) maintenue par un arbre d'enroulement de manière à pouvoir se dérouler et s'enrouler et munie à son extrémité avant dans le sens de déroulement d'une pièce profilée indéformable (7) qui est maintenue par des logements du véhicule dans une position déroulée de protection approximativement horizontale de la structure plane (5), lesdits logements étant disposés sur les limitations latérales opposées du coffre (1), ainsi qu'avec des guides profilés (8) attenants aux logements et s'étendant le long des limitations latérales du coffre (1) jusque dans une zone du toit du coffre (1) dans laquelle la pièce profilée et la structure plane (5) peuvent être mues par glissement ou par roulement pour effectuer un mouvement entre la position de protection et une position de confort, sachant qu'aux guides profilés (8 à 8h) est affecté au moins un moyen d'arrêt (11 à 11g, 12 à 12g, 14) pour fixer temporairement la pièce profilée (6 à 6h), **caractérisé en ce que** le moyen d'arrêt (11 à 11g, 12 à 12g, 14) est disposé dans une zone de l'extrémité supérieure des guides profilés (8 à 8h).

2. Cache-bagages selon la revendication 1, **caractérisé en ce que** l'au moins un moyen d'arrêt peut être transféré dans une position de déblocage en fonction de la charge.

3. Cache-bagages selon la revendication 1, **caractérisé en ce que** sont prévus, en particulier dans la zone de l'extrémité supérieure des guides profilés, des moyens de guidage forcé (13) qui alignent la pièce profilée (6g) dans une position d'attente décalée vers la zone du toit (D) relativement à une position de guidage normale.

4. Cache-bagages selon la revendication 1 ou 2, **caractérisé en ce que** les moyens d'arrêt (11 à 11g, 12 à 12g) sont de conception mécanique et agissent par force ou par complémentarité de forme.

5. Cache-bagages selon la revendication 1 ou 2, **caractérisé en ce que** les moyens d'arrêt (14) agissent sans contact, en particulier en générant un champ magnétique.

6. Cache-bagages selon la revendication 1, **caractérisé en ce que** la pièce profilée (6e) est munie sur ses côtés opposés d'éléments de guidage (7e) qui sont menés dans les guides profilés (8e) et forment un axe de guidage s'étendant transversalement par rapport au sens de déplacement et situé à une certaine distance d'un centre de gravité de la pièce profilée (6e), et **en ce qu'**aux éléments de guidage (7e) sont affectés des moyens d'appui (13) qui maintiennent, contre sa force de gravité, la pièce profilée (6e) alignée sur une position de guidage définie dans sa course de déplacement dans les guides profilés (8e).

7. Cache-bagages selon la revendication 3, **caractérisé en ce que** les moyens de guidage forcé comprennent des moyens d'appui mécaniques (13) qui exercent sur la pièce profilée (6g) un couple en direction du plafond (D) pendant le transfert de la pièce profilée (6e) dans la position d'attente.

8. Cache-bagages selon l'une des revendications précédentes, **caractérisé en ce que** les éléments de guidage ont une forme dissymétrique de révolution relativement à un axe longitudinal de la pièce profilée, qui s'étend dans le sens transversal du véhicule.
